# EUROPEAN PATENT APPLICATION

(11) **EP 4 160 477 A1**
(43) Date of publication of application: **05.04.2023**
(21) Application number: 21829076.5
(22) Date of filing: 23.06.2021
(51) Int. Cl.: G06K 9/62

(54) **MODAL INFORMATION COMPLEMENTATION METHOD, APPARATUS AND DEVICE**

(30) Priority: 23.06.2020 CN 202010582370
(71) Applicant: Huawei Cloud Computing Technologies Co., Ltd., Guizhou 550025 (CN)
(72) Inventor: LI, Taisong, Shenzhen, Guangdong 518129 (CN); LI, Minglei, Shenzhen, Guangdong 518129 (CN); WU, Yiling, Shenzhen, Guangdong 518129 (CN); HUAI, Baoxing, Shenzhen, Guangdong 518129 (CN); YUAN, Jing, Shenzhen, Guangdong 518129 (CN)
(74) Representative: Thun, Clemens
(86) International application number: PCT/CN2021/101905
(87) International publication number: WO 2021/259336

(57) **Abstract**

A modal information completion method, an apparatus, and a device are provided. In this application, a completion apparatus first obtains a modal information group, where the modal information group includes at least two pieces of modal information. Then, the completion apparatus may determine, based on an attribute of the modal information group, whether a part or all of first modal information in the modal information group is missing. Subsequently, the completion apparatus determines a target feature vector of the first modal information based on a preset feature vector mapping relationship and a feature vector of second modal information in the modal information group. The target feature vector that is of the first modal information and that is determined by the completion apparatus by using the feature vector of the second modal information is closer to real modal information of the first modal information, so that accuracy of the target feature vector of the first modal information is ensured.

## Description

### TECHNICAL FIELD

This application relates to the field of computer technologies, and in particular, to a modal information completion method, an apparatus, and a device.

### BACKGROUND

A modality refers to an information source or an information form. The modality is widely defined. For example, human sense of touch, sense of hearing, sense of touch, sense of sight, and sense of smell each may be used as an information source, and each may be considered as a modality. The information form includes a speech, a video, a text, and the like, each of which may be used as a module. Various sensors such as a radar, a pressure gauge, and an accelerometer are also information sources. Similarly, any sensor may be used as a modality. The modality is widely defined, and is not limited to the cases listed above. For example, two different languages may be considered as two different modalities, and data collected in two different scenarios may also be considered as two different modalities.

For multimodal machine learning (multimodal machine learning, MMML), a machine learning method is used to obtain a capability of processing and understanding a plurality of pieces of modal information (modal information is information content of a modality). Currently, multimodal machine learning is mostly used to learn modal information of an image type, a video type, an audio type, a text type, and the like.

However, in a process of multimodal machine learning, a case of modality missing usually occurs. The modality missing means that a part or all of at least one piece of modal information is missing from a plurality of pieces of modal information. The modality missing affects accuracy of multimodal machine learning.

Currently, for a problem of modality missing, common processing manners include data cleaning and data filling. Data cleaning refers to removing remaining information in missing modal information. The data cleaning manner causes all information of at least one modality to be missing from a plurality of pieces of modal information. As a result, when multimodal machine learning is performed, efficiency of multimodal machine learning becomes lower because of a failure to learn at least one piece of missing modal information. Data filling refers to filling partial information of at least one missing modality with a zero value or with an average value of modal information. In this manner, filled information does not conform to an actual distribution status of the modal information. As a result, when multimodal machine learning is performed, at least one piece of missing modal information cannot be accurately learned.

To sum up, all processing manners for the problem of modality missing cause lower efficiency and lower accuracy of multimodal machine learning.

### SUMMARY

This application provides a modal information completion method, apparatus, and device, to accurately complete modal information.

According to a first aspect, this application provides a modal information completion method. The method may be performed by a completion apparatus. In the method, the completion apparatus first obtains a modal information group, where the modal information group includes at least two pieces of modal information. Then, the completion apparatus may determine, based on an attribute of the modal information group, whether one or more pieces of modal information is missing from the modal information group (that is, all of one or more pieces of modal information is missing) and whether partial information of one or more pieces of modal information is missing. For ease of description, modal information that is partially or completely missing is referred to as first modal information. In the modal information group, modal information other than the first modal information is referred to as second modal information. The completion apparatus may extract a feature vector of the second modal information, and then determine a target feature vector of the first modal information based on a preset feature vector mapping relationship and the feature vector of the second modal information.

According to the foregoing method, the completion apparatus may determine the target feature vector of the first modal information by using the feature vector of the second modal information in the modal information group. The target feature vector of the first modal information determined by using the feature vector of the second modal information is closer to a real feature vector of the first modal information, thereby ensuring accuracy of the target feature vector of the first modal information.

In a possible implementation, when determining the target feature vector of the first modal information based on the preset feature vector mapping relationship and the feature vector of the second modal information, the completion apparatus may first determine a candidate feature vector of the first modal information based on the feature vector mapping relationship and the feature vector of the second modal information, and then determine the target feature vector of the first modal information based on the candidate feature vector of the first modal information. For example, the completion apparatus may adjust the candidate feature vector of the first modal information, and use an adjusted candidate feature vector of the first modal information as the target feature vector of the first modal information; or may directly use the candidate feature vector of the first modal information as the target feature vector of the first modal information.

According to the foregoing method, the completion apparatus can first determine the candidate feature vector of the first modal information, and then determine the target feature vector of the first modal information by using the candidate feature vector of the first modal information, so that the finally determined target feature vector of the first modal information can be closer to the real feature vector of the first modal information.

In a possible implementation, there are many manners for setting the feature vector mapping relationship. For example, the feature vector mapping relationship may be set in a data mapping manner. For another example, the feature vector mapping relationship may alternatively be set by using a machine learning model. A machine learning model learns the feature vector mapping relationship, and can be used to output a feature vector of other modal information based on an input feature vector of modal information. The completion apparatus may determine the target feature vector of the first modal information based on a preset machine learning model and the feature vector of the second modal information.

According to the foregoing method, the completion apparatus may more conveniently determine the target feature vector of the first modal information by using the machine learning model.

In a possible implementation, the attribute of the modal information group includes some or all of the following:
a quantity of pieces of modal information in the modal information group, a data volume of each piece of modal information in the modal information group, and a type of each piece of modal information in the modal information group.

According to the foregoing method, the attribute of the modal information group can indicate one or more pieces of information in the modal information group, so that the completion apparatus can relatively quickly determine that a part or all of the first modal information is missing.

In a possible implementation, before the completion apparatus extracts the feature vector of the second modal information, in addition to determining that a part or all of the first modal information is missing, the completion apparatus may further determine, based on the attribute of the modal information group, that the second modal information is complete.

According to the foregoing method, the completion apparatus can quickly distinguish missing modal information (for example, the first modal information) or non-missing modal information (for example, the second modal information) in the modal information group based on the attribute of the modal information group.

In a possible implementation, there are many manners in which the completion apparatus determines the attribute of the modal information group, and some of the manners are listed below:

Manner 1: The completion apparatus may obtain first auxiliary information, and determine the attribute of the modal information group based on the first auxiliary information. The first auxiliary information can indicate the attribute of the modal information group, that is, can indicate some or all of the following: the quantity of pieces of modal information in the modal information group, the data volume of each piece of modal information in the modal information group, and the type of each piece of modal information in the modal information group.

Manner 2: Second auxiliary information is preset in the completion apparatus, and the second auxiliary information is information to which any modal information group received by the completion apparatus needs to conform. The completion apparatus may determine the attribute of the modal information group based on the preset second auxiliary information. The second auxiliary information can indicate some or all of the following: a quantity of pieces of modal information in any obtained modal information group, a data volume of each piece of modal information in the any obtained modal information group, and a type of each piece of modal information in the any obtained modal information group.

Manner 3: The completion apparatus determines the attribute of the modal information group based on an attribute of another modal information group. The another modal information group is a modal information group obtained before the modal information group is obtained.

According to the foregoing method, the completion apparatus may flexibly determine the attribute of the modal information group in a plurality of different manners.

In a possible implementation, the modal information group further includes third modal information. The completion apparatus may extract a feature vector of the third modal information, and then determine the target feature vector of the first modal information based on the preset feature vector mapping relationship, the feature vector of the third modal information, and the feature vector of the second modal information.

According to the foregoing method, the completion apparatus may determine the target feature vector of the first modal information based on feature vectors of a plurality of pieces of modal information in the modal information group.

In a possible implementation, when determining the target feature vector of the first modal information based on the preset feature vector mapping relationship, the feature vector of the third modal information, and the feature vector of the second modal information, the completion apparatus may determine another candidate feature vector of the first modal information based on the feature vector mapping relationship and the feature vector of the third modal information, and then determine the target feature vector of the first modal information based on the candidate feature vector of the first modal information and the another candidate feature vector of the first modal information.

According to the foregoing method, the completion apparatus may accurately determine the target feature vector of the first modal information based on a plurality of candidate feature vectors of the first modal information.

In a possible implementation, when determining the target feature vector of the first modal information based on the candidate feature vector of the first modal information and the another candidate feature vector of the first modal information, the completion apparatus may configure corresponding weights for the two candidate feature vectors, and then determine the target feature vector of the first modal information based on the candidate feature vector of the first modal information and a corresponding weight, and the another candidate feature vector of the first modal information and a corresponding weight.

According to the foregoing method, the completion apparatus determines the target feature vector of the first modal information in a manner of performing weighted summation on the plurality of candidate feature vectors.

In a possible implementation, when the completion apparatus determines that a part of the first modal information is missing from the modal information group, the completion apparatus may further determine whether the missing part of the first modal information conforms to a preset condition. For example, the completion apparatus may determine whether a data volume of missing partial information of the first modal information or a proportion of the missing partial information is greater than or less than a threshold. After determining that the missing part of the first modal information conforms to the preset condition, the completion apparatus may determine the target feature vector of the first modal information.

According to the foregoing method, the completion apparatus may further determine the preset condition to which the missing partial information of the first modal information needs to conform, so that the target feature vector of the first modal information can be accurately determined subsequently.

In a possible implementation, the modal information group includes a plurality of pieces of modal information, and a type of each piece of modal information may be different.

According to the foregoing method, the completion apparatus can use a feature vector of one type of modal information to determine a target feature vector of another type of modal information.

In a possible implementation, a type of the first modal information or the second modal information is not limited in this embodiment of this application. Using the second modal information as an example, the second modal information may be modal information of a speech type, may be modal information of an image type, or may be modal information of a text type. The second modal information may alternatively be structured data. For different types of modal information, the completion apparatus may extract the feature vector of the second modal information in different manners. For example, when the second modal information is structured data, the completion apparatus may extract the feature vector of the second modal information in a one-hot encoding manner.

According to the foregoing method, for different types of second modal information, the completion apparatus may determine the feature vector of the second modal information in a corresponding targeted manner.

In a possible implementation, a specific type of the machine learning model is not limited, and may be a Seq2Seq model, or may be an MCTN.

According to a second aspect, an embodiment of this application further provides a completion apparatus. For a beneficial effect, refer to the description of the first aspect. Details are not described herein. The apparatus has a function of implementing a behavior in the method example in the first aspect. The function may be implemented by hardware, or may be implemented by hardware executing corresponding software. The hardware or the software includes one or more modules corresponding to the foregoing function. In a possible design, a structure of the apparatus includes an information obtaining module, a feature extraction module, and a completion module. These modules may perform corresponding functions in the method example in the first aspect. For details, refer to the detailed descriptions in the method example. Details are not described herein again.

According to a third aspect, an embodiment of this application further provides a computing device. The computing device includes a processor and a memory, and may further include a communication interface. The processor executes program instructions in the memory, to perform the method provided in any one of the first aspect or the possible implementations of the first aspect. The memory is coupled to the processor, and stores program instructions and data that are necessary in a process of determining a traffic volume. The communication interface is configured to communicate with another device, for example, receive a modal information group, and for another example, send a target feature vector of missing modal information and a feature vector of missing modal information.

According to a fourth aspect, this application provides a computing device cluster. The computing device cluster includes at least one computing device. Each computing device includes a memory and a processor. The processor of the at least one computing device is configured to access code in the memory, to perform the method provided in any one of the first aspect or the possible implementations of the first aspect.

According to a fifth aspect, this application provides a non-transient readable storage medium. When the non-transient readable storage medium is executed by a computing device, the computing device performs the method provided in any one of the first aspect or the possible implementations of the first aspect. The storage medium stores a program. The storage medium includes but is not limited to a volatile memory, such as a random access memory, and a non-volatile memory, such as a flash memory, a hard disk drive (hard disk drive, HDD), or a solid state drive (solid state drive, SSD).

According to a sixth aspect, this application provides a computing device program product. The computing device program product includes computer instructions, and when the computer instructions are executed by a computing device, the computing device performs the method provided in any one of the first aspect or the possible implementations of the first aspect. The computer program product may be a software installation package. When the method provided in any one of the first aspect or the possible implementations of the first aspect needs to be used, the computer program product may be downloaded and executed on the computing device.

According to a seventh aspect, this application further provides a computer chip. The chip is connected to a memory, and the chip is configured to read and execute a software program stored in the memory, to perform the method provided in any one of the first aspect or the possible implementations of the first aspect.

### BRIEF DESCRIPTION OF DRAWINGS

FIG. 1 is a schematic diagram of a structure of a system according to this application;
FIG. 2 is a schematic diagram of a structure of a completion apparatus according to this application;
FIG. 3 is a schematic diagram of a modal information completion method according to this application;
FIG. 4 is a schematic diagram of training a machine learning model according to this application;
FIG. 5A is a schematic diagram of a modal information completion method for a speech type and an image type according to this application;
FIG. 5B is a schematic diagram of a modal information completion method for a text type according to this application;
FIG. 6 is a schematic diagram of a structure of a computer cluster according to this application; and
FIG. 7 is a schematic diagram of a structure of a system according to this application.

### DESCRIPTION OF EMBODIMENTS

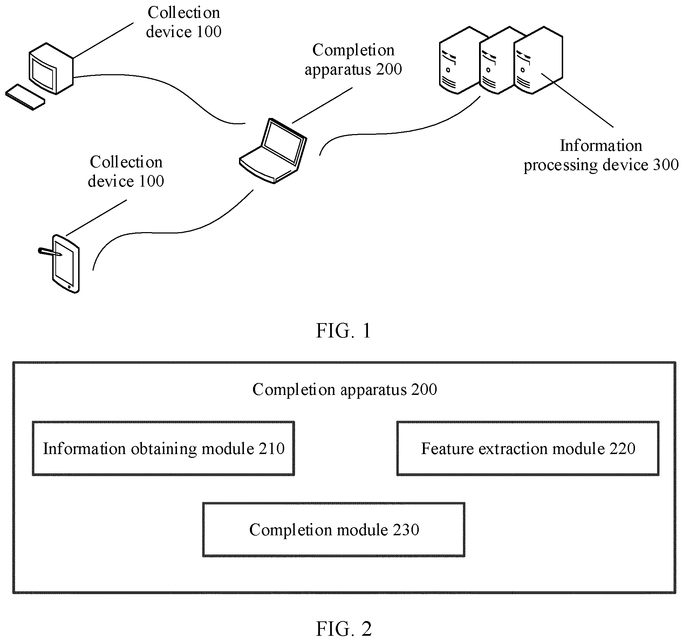

As shown in FIG. 1, FIG. 1 is a schematic diagram of a structure of a system applicable to an embodiment of this application. The system includes a collection device 100 and a completion apparatus 200, and optionally, may further include an information processing device 300.

The collection device 100 is configured to collect information, and the information collected by the collection device 100 may be used as modal information. A quantity and a specific form of the collection device 100 are not limited in this embodiment of this application. The system may include one or more collection devices 100. The collection device 100 may be a sensor, a camera, a smart camera, a surveillance device, a mobile phone (mobile phone), a tablet (pad), a computer with a transceiver function, a terminal device in a smart city (smart city), a terminal device in a smart home (smart home), an Internet of Things (internet of things, IoT) terminal device, or the like. Any device that can collect information is applicable to this embodiment of this application.

The information collected by the collection device 100 may be used as modal information, or may be a modal information group including a plurality of pieces of modal information. For example, the collection device 100 may be a mobile phone, and modal information of a speech type may be collected by using a microphone disposed in the mobile phone, modal information of an image type may be collected by using a camera in the mobile phone, and modal information of a text type may be further collected by using an application (for example, WeChat or QQ) or the like installed in the mobile phone. The collection device 100 may be a camera, and the camera may collect a video. The video may be used as a modal information group, and the video includes modal information of speech, image, and text types.

The completion apparatus 200 may obtain the modal information group from the collection device 100, and perform a modal information completion method provided in embodiments of this application. There is a connection between the collection device 100 and the completion apparatus 200. A connection manner between the collection device 100 and the completion apparatus 200 is not limited in this embodiment of this application. For example, the collection device 100 may be connected to the completion apparatus 200 in a wireless or wired manner. For another example, the completion apparatus 200 (or some modules in the completion apparatus 200) may alternatively be disposed in the collection device 100. After the collection device 100 collects the modal information group, the completion apparatus 200 may relatively quickly obtain the modal information group, and perform the modal information completion method provided in the embodiments of this application.

The information processing device 300 may obtain, from the completion apparatus 200, a feature vector of each piece of modal information in the modal information group, where the feature vector of each piece of modal information in the modal information group includes a target feature vector of missing modal information and a feature vector of non-missing modal information; and process and understand the modal information group based on the feature vector of each piece of modal information in the modal information group. For example, the information processing device 300 includes a multimodal machine learning model, which has a capability of processing and understanding the modal information group. A manner in which the information processing device 300 processes and understands the modal information group is related to an application scenario of the multimodal machine learning model.

For example, in an emotion recognition scenario, the information processing device 300 may perform emotion recognition on the modal information group, to predict an emotion hidden in the modal information group. For another example, if the modal information group is a video, the information processing device 300 may generate a video label (used to identify a category of the video) based on the video, and may further extract a video feature (such as the category and duration of the video) to perform video recommendation, to recommend the video to a user who has a potential requirement for the video. For another example, the information processing device 300 may analyze the modal information group, to detect target information (such as a false advertisement or violent content) in the modal information group. For another example, if the modal information group includes modal information of a speech type, or the modal information group is a video showing a lip shape, the information processing device 300 may perform speech recognition on the modal information group, to determine speech content. For another example, if the modal information group includes face information, voiceprint information, human body gait information, fingerprint information, or iris information, the information processing device 300 may perform identify recognition on the modal information group, to determine user information to which the modal information group belongs.

The foregoing enumerated scenarios are merely examples, and the manner in which the information processing device 300 processes and understands the modal information group is not limited in this embodiment of this application.

There is a connection between the information processing device 300 and the completion apparatus 200. A connection manner between the information processing device 300 and the completion apparatus 200 is similar to the connection manner between the collection device 100 and the completion apparatus 200. For details, refer to the foregoing content. Details are not described herein.

As shown in FIG. 2, FIG. 2 is a schematic diagram of a structure of a completion apparatus 200 according to an embodiment of this application. The completion apparatus 200 includes an information obtaining module 210, a feature extraction module 220, and a completion module 230.

The information obtaining module 210 is configured to obtain a modal information group. At least one piece of modal information is missing from the modal information group, or at least one piece of modal information has a missing part (for ease of description, modal information that has a missing part or modal information that is missing is referred to as missing modal information in this embodiment of this application).

The feature extraction module 220 can obtain the modal information group from the information obtaining module 210. For modal information that has no missing part, that is, complete modal information in the modal information group (for ease of description, the modal information that has no missing part or the complete modal information is referred to as non-missing modal information in this embodiment of this application), the feature extraction module 220 extracts a feature vector of the non-missing modal information, where each piece of non-missing modal information corresponds to one feature vector.

The completion module 230 obtains the feature vector of the non-missing modal information from the feature extraction module 220, and determines a target feature vector of the missing modal information based on a preset feature vector mapping relationship and the feature vector of the non-missing modal information. For example, the completion module 230 may first determine one or more candidate feature vectors of the missing modal information based on the preset feature vector mapping relationship and the feature vector of the non-missing modal information, and then determine the target feature vector of the missing modal information based on the one or more candidate feature vectors of the missing modal information.

The feature vector mapping relationship indicates a mapping relationship between feature vectors of different types of modal information. The mapping relationship between feature vectors of different types of modal information includes a mapping relationship between a feature vector of non-missing modal information and a feature vector of missing modal information. A setting form of the feature vector mapping relationship is not limited in this embodiment of this application. For example, the feature vector mapping relationship may be set in the completion module 230 in a form of a machine learning model. The machine learning model can analyze the mapping relationship between feature vectors of different types of modal information, learn the mapping relationship between feature vectors of different types of modal information, and output a feature vector of one or more pieces of other modal information based on an input feature vector of one or more pieces of modal information.

In this embodiment of this application, when performing modal information completion, the completion apparatus 200 needs to first obtain the feature vector of the non-missing modal information in the modal information group, and determine the target feature vector of the missing modal information based on the preset feature vector mapping relationship and the feature vector of the non-missing modal information. Because the modal information group is generally a plurality of pieces of modal information with specific correlation, the target feature vector of the missing modal information determined by using the feature vector of the non-missing modal information is closer to a real feature vector of the missing modal information and closer to an information distribution status of the missing modal information. Accuracy of multimodal machine learning based on the target feature vector of the missing modal information and the feature vector of the non-missing modal information is also higher.

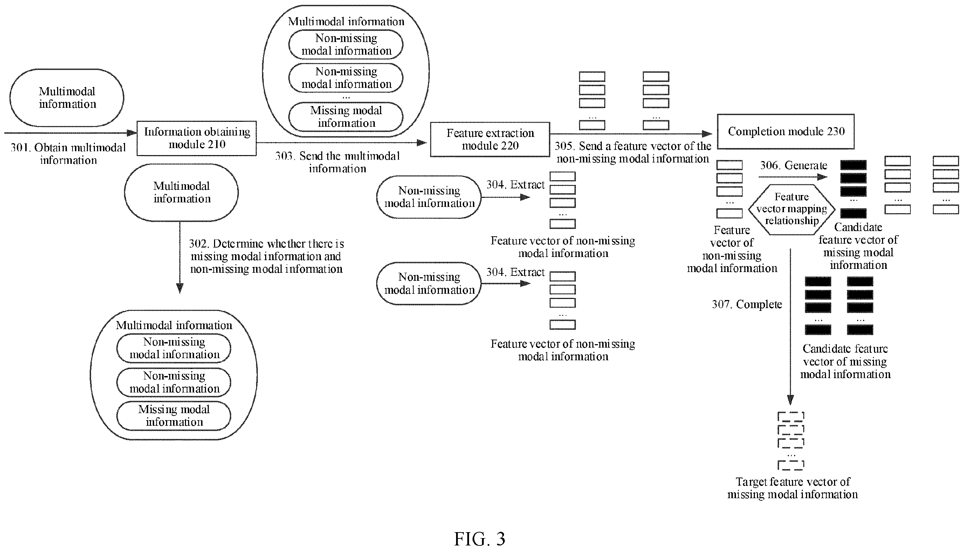

With reference to FIG. 3, the following describes a modal information completion method provided in an embodiment of this application. Referring to FIG. 3, the method includes the following steps.

Step 301: An information obtaining module 210 obtains a modal information group, where the modal information group includes at least two pieces of modal information.

Step 302: The information obtaining module 210 determines, based on an attribute of the modal information group, that a part or all of a first modal information group is determined from the modal information group, and that the modal information group includes complete second modal information.

After obtaining the modal information group, the information obtaining module 210 may first determine, based on the attribute of the module information group, whether there is missing modal information in the modal information group. If it is determined that the modal information group includes missing modal information, the information obtaining module 210 sends the modal information group to a feature extraction module 220, that is, step 302 is performed. If it is determined that the modal information group does not include missing modal information, the information obtaining module 210 may send the modal information group to the feature extraction module 220, to extract a feature vector of each piece of modal information in the modal information group. Then, the feature vector of each piece of modal information in the modal information group may be sent to an information processing device 300, or may be sent to a training device. The training device may train a multimodal machine learning model by using the feature vector of each piece of modal information in the modal information group.

In this embodiment of this application, the attribute of the modal information group can indicate some or all of the following: a quantity of pieces of modal information in the module information group and a data volume of each piece of modal information in the modal information group. A manner of indicating the data volume of the modal information is not limited in this application. For example, the data volume of the modal information may be a size of the modal information (for example, a quantity of occupied bytes). For another example, for modal information of a speech type, a data volume of the modal information may be indicated by duration. Optionally, the attribute of the modal information group may further include a type of each piece of modal information in the modal information group.

Before determining, based on the attribute of the module information group, whether the modal information group includes missing modal information and non-missing modal information, the information obtaining module 210 needs to first determine the attribute of the modal information group. A method for determining the attribute of the modal information group by the information obtaining module 210 is not limited in this embodiment of this application.

For example, when obtaining the modal information group, the information obtaining module 210 may further obtain first auxiliary information. The first auxiliary information can indicate the attribute of the modal information group. That is, the first auxiliary information indicates some or all of the following: the quantity of pieces of modal information in the module information group and the data volume of each piece of modal information in the modal information group. Optionally, the first auxiliary information may further indicate a type or a name of each piece of modal information in the modal information. After obtaining the first auxiliary information, the information obtaining module 210 may determine the attribute of the modal information group based on the first auxiliary information.

For another example, second auxiliary information is preconfigured in the information obtaining module 210, and the second auxiliary information may indicate an attribute of any modal information group (for example, a quantity of pieces of modal information in the module information group, and a data volume of each piece of modal information in the modal information group) obtained by the information obtaining module 210. That is, any modal information group obtained by the signal obtaining module 210 needs to satisfy the second auxiliary information. The information obtaining module 210 may determine the attribute of the modal information group based on the second auxiliary information.

For another example, the information obtaining module 210 may compare an attribute of one or more modal information groups obtained before the modal information group is obtained with the attribute of the modal information group, and determine the attribute of the modal information group based on the attribute of the one or more modal information groups. The attribute of the one or more modal information groups is used as the attribute of the modal information group.

After determining the attribute of the modal information group, the information obtaining module 210 may determine whether an obtained multimodal information group satisfies the attribute of the modal information group. For example, the information obtaining module 210 may determine whether a quantity of pieces of modal information in the multimodal information group is consistent with the quantity of pieces of modal information indicated by the attribute of the multimodal information group. If the quantities are consistent, it indicates that the multimodal information group includes all modal information; or if the quantities are inconsistent, it indicates that all of one or more pieces of modal information is missing from the multimodal information group. For another example, the information obtaining module 210 may determine whether a data volume of each piece of modal information in the multimodal information group is consistent with the data volume of each piece of modal information indicated by the attribute of the multimodal information group. For any modal information, whether a data volume of the modal information is consistent with the data volume of the modal information indicated by the attribute of the multimodal information group is determined. If the data volumes are consistent, it indicates that the modal information is complete modal information, that is, non-missing modal information; or if the data volumes are inconsistent, it indicates that partial information is missing from the modal information, and the modal information is missing modal information.

For example, the attribute of the modal information group determined by the information obtaining module 210 indicates that the quantity of pieces of modal information in the modal information group is 3, but a quantity of pieces of actually obtained modal information included in the modal information group is 2. The information obtaining module 210 may determine that all of one piece of modal information is missing from the modal information group. For another example, the attribute of the modal information group determined by the information obtaining module 210 indicates that modal information of the speech type in the modal information group is speech data with 10-minute duration, but actually obtained modal information of the speech type in the modal information group is speech data with 2-minute duration. The information obtaining module 210 may determine that partial information is missing from the modal information of the speech type in the modal information group.

The information obtaining module 210 may alternatively use another method to determine that there is missing modal information in the modal information group. An example in which the modal information group is a video is used, and the video includes modal information of a text type, a speech type, an image type, and the like. When determining whether modal information of the image type has a missing part, the information obtaining module 210 may detect whether there is a fuzzy image in the modal information of the image type, and if there is a fuzzy image, determine that the modal information of the image type has a missing part. When determining whether modal information of the speech type has a missing part, the information obtaining module 210 may determine whether total duration of the modal information of the speech type is equal to total duration of the video; and if the duration is not equal, determine that the modal information of the speech type has a missing part; or if the duration is equal, determine that the modal information of the speech type has no missing part.

In this embodiment of this application, an example in which the modal information group includes missing modal information and non-missing modal information is used for description. The missing modal information may be partially missing information or completely missing information. The non-missing modal information is complete modal information in the modal information group.

In an actual application scenario, there are many situations that cause modality missing. For example, in a transmission process of the modal information group, due to impact of a transmission environment, such as a transmission cable fault, transmission network interruption, or a fault of a collection device 100, a part or all of one or more pieces of modal information is missing from the modal information group. For another example, before the information obtaining module 210 receives the modal information group, another device performs a preprocessing operation on the modal information group, such as noise reduction, filtering, cleaning, compression, or recoding. As a result, a part or all of one or more pieces of modal information is missing from the modal information group. Noise reduction is used as an example. During noise reduction, "noise" in modal information is usually removed, and removing "noise" causes some information in the modal information to be deleted.

Before performing step 303, the information obtaining module 210 may further determine whether a missing part of the missing modal information conforms to a preset condition, for example, whether a data volume of missing partial information of the missing modal information (for example, a size of the data volume of the partial information or duration corresponding to the partial information) is less than a first threshold. If the data volume of the missing partial information of the missing modal information (for example, the size of the data volume of the partial information or the duration corresponding to the partial information) is less than the first threshold, the data volume of the missing partial information of the missing modal information is relatively small, and the information obtaining module 210 may perform step 303; or otherwise, the information obtaining module 210 may discard the modal information group.

For another example, the information obtaining module 210 may determine whether a proportion of the missing partial information of the missing modal information to total information of the missing modal information is less than a second threshold. If the proportion of the missing partial information of the missing modal information to the total information of the missing modal information is less than the second threshold, the data volume of the missing partial information of the missing modal information is relatively small, and the information obtaining module 210 may perform step 303; or otherwise, the information obtaining module 210 may discard the modal information group.

An example in which the modal information group includes modal information of three types that are the speech type, the text type, and the image type is used. If a type of the missing modal information in the modal information group is an image, a relatively small quantity of images are missing from the modal information of the image type, and the quantity of missing images is less than an image threshold (a representation form of the second threshold), the information obtaining module 210 may determine to send the modal information group; and if a large quantity of images are missing from the modal information of the image type, and the quantity of missing images is greater than the image threshold, the information obtaining module 210 may discard the modal information group. If the type of the missing modal information in the modal information group is a speech, a relatively small amount of speech data is missing from the modal information of the speech type, and duration of the missing speech data is less than a time threshold (another representation form of the second threshold), the information obtaining module 210 may determine to send the modal information group; and if a large amount of speech data is missing from the modal information of the speech type, and duration of the missing speech data is greater than the time threshold, the information obtaining module 210 may discard the modal information group.

For another example, the information obtaining module 210 may determine whether a data volume ratio of remaining partial information (information other than the missing partial information is the remaining partial information) in the missing modal information to the missing partial information is greater than a third threshold. If the data volume ratio of the remaining partial information to the missing partial information is greater than the third threshold, the data volume of the missing partial information of the missing modal information is relatively small, and the information obtaining module 210 may perform step 303; or otherwise, the information obtaining module 210 may discard the modal information group.

A type of the modal information is not limited in this embodiment of this application. For example, the modal information may be unstructured data of the speech type, the image type, the text type, or the like, or the modal information may be structured data. The structured data is data that can be represented by using a unified structure (for example, a two-dimensional table).

The information obtaining module 210 may alternatively analyze the type of the missing modal information, and determine, based on an analysis result, whether to send the modal information group.

An example in which the modal information group includes modal information of three types that are the speech type, the text type, and the image type is used. If the type of the missing modal information in the modal information group is an image, because the modal information of the image type generally includes relatively rich information, and it is difficult to complete the modal information of the image type, the information obtaining module 210 may discard the modal information group. If the type of the missing modal information in the modal information group is a text, because the modal information of the speech type still exists in the modal information group, it is less difficult to complete the modal information, and the information obtaining module 210 may determine to send the modal information group.

Step 303: The information obtaining module 210 sends the modal information group to the feature extraction module 220.

Step 304: After the feature extraction module 220 obtains the modal information group, for the non-missing modal information in the modal information group, the feature extraction module 220 extracts a feature vector of the non-missing modal information, where each piece of non-missing modal information corresponds to one feature vector.

When the feature extraction module 220 performs step 304, the feature extraction module 220 may extract a feature vector of only one piece of non-missing modal information, or may extract feature vectors of a plurality of pieces of non-missing modal information. A manner of the feature vector of the non-missing modal information is not limited in this embodiment of this application, and any manner in which the feature vector can be extracted is applicable to this embodiment of this application.

If an application scenario of multimodal machine learning is different, a manner of extracting the feature vector by the feature extraction module 220 is also different. An example in which the modal information group is a video is used. In an emotion recognition scenario, the feature extraction module 220 may determine a feature vector of modal information of the speech type base on a spectrum feature, a low level descriptor (low level descriptors, LLDs), or the like of a speech. The feature extraction module 220 may perform convolution on a face area in an image to obtain a feature vector of modal information of the image type. For another example, in a video recommendation scenario, the feature extraction module 220 may determine a feature vector of modal information of the speech type based on a spectrum feature and a time sequence feature of a speech, the feature extraction module 220 may obtain a feature vector of modal information of the image type by performing convolution on an entire image, and the feature extraction module 220 may use a word vector of modal information of the text type as a feature vector of the modal information of the text type.

If one or more pieces of modal information in the modal information group are structured data, for the structured data, the feature extraction module 220 may extract a feature vector of the structured data in a one-hot encoding (one-hot) manner.

For example, the structured data is statistical data of an age of a user, and the feature extraction module 220 may construct a 100-dimensional vector. When the age of the user is 18, an 18^{th} value of the 100-dimensional vector is 1, and other values are 0. The 100-dimensional vector is a feature vector of the structured data. For example, the structured data is statistical data of a gender of a user, and the feature extraction module 220 may construct a two-dimensional vector. When the gender of the user is female, the two-dimensional vector is 10; and when the gender of the user is male, the two-dimensional vector is 01.

For the structured data including data that is continuous data, for example, the structured data is a statistical value of a temperature, a pressure, a length, or the like, and the statistical value of the temperature, the pressure, or the length may be a continuous value, the feature extraction module 220 may first perform data interval division, where each data interval corresponds to one value range; and then extract a feature vector of the structured data in the one-hot manner. For example, the structured data is a statistical value of a temperature. The temperature value may be divided into 100 intervals from 0 to 100 degrees, and a temperature interval of each interval is 1 degree. When the temperature value is 37.5 degrees, the temperature value belongs to an interval of 37 to 38 degrees. After the interval to which the temperature value belongs is determined, a feature vector of the structured data is extracted in the one-hot manner. The feature extraction module 220 constructs a 100-dimensional vector, where a 38^{th} value of the 100-dimensional vector is 1, and other values are 0. The 100-dimensional vector is the feature vector of the structured data.

Step 305: The feature extraction module 220 sends the feature vector of the non-missing modal information to a completion module 230.

Step 306: The completion module 230 determines a candidate feature vector of the missing modal information based on a preset feature vector mapping relationship and the feature vector of the non-missing modal information.

The feature vector mapping relationship is preset in the completion module 230, and the feature vector mapping relationship describes a mapping relationship between feature vectors of different types of modal information. An example in which the modal information group includes modal information of three types that are the speech type, the text type, and the image type is used. The feature vector mapping relationship includes but is not limited to: a mapping relationship between a feature vector of modal information of the speech type and a feature vector of modal information of the image type, a mapping relationship between a feature vector of modal information of the text type and a feature vector of modal information of the image type, a mapping relationship between a feature vector of modal information of the speech type and a feature vector of modal information of the text type, and a mapping relationship between a feature vector of modal information of the image type and a feature vector of modal information of the text type.

A setting form of the feature vector mapping relationship is not limited in this embodiment of this application. For example, the feature vector mapping relationship may be a mapping relationship between data. For another example, the feature vector mapping relationship may be set in a form of a machine learning model. The machine learning model pre-learns the mapping relationship between feature vectors of different types of modal information, and can output a feature vector of another type of modal information based on an input feature vector of modal information.

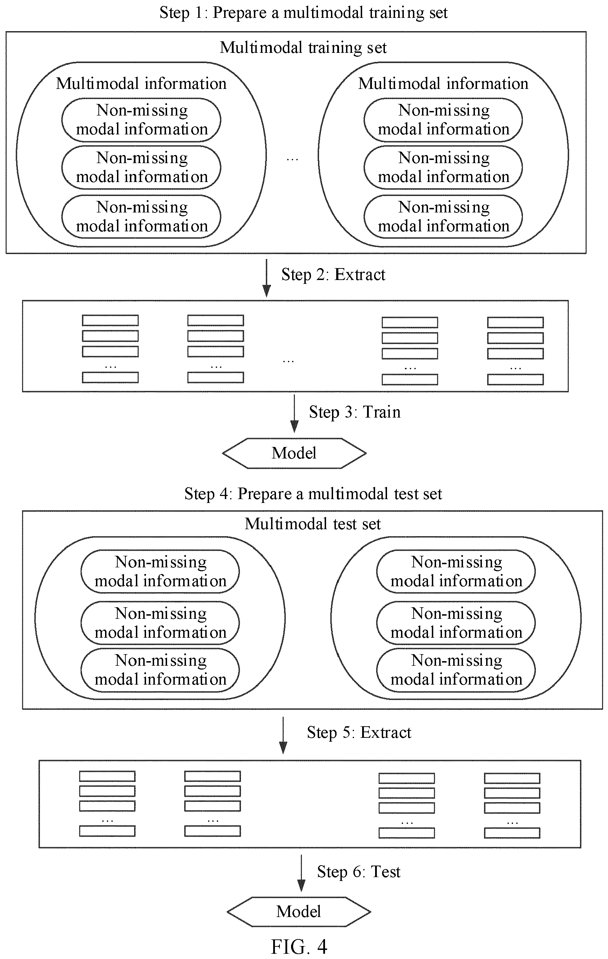

Referring to FIG. 4, the following describes a training manner of a machine learning model by using an example in which the feature vector mapping relationship is set in the completion module 230 in the form of a machine learning model.

Step 1: Prepare a multimodal training set, where the training set includes a plurality of modal information groups, each modal information group includes a plurality of pieces of modal information, and each piece of modal information is complete and has no missing part. The multimodal training set may also be used to train a multimodal machine learning model. A training manner of the multimodal machine learning model is not limited in this embodiment of this application, and any manner in which the multimodal machine learning model can be trained by using the multimodal training set is applicable to this embodiment of this application.

Step 2: Extract a feature vector of each piece of modal information in each modal information group in the multimodal training set. For an extraction manner of the feature vector of the modal information, refer to step 302. Details are not described herein.

Step 3: Train a preset machine learning model in a supervised learning manner based on the feature vector of each piece of modal information in each modal information group in the multimodal training set, so that the preset machine learning model can learn a mapping relationship between feature vectors of different types of modal information. The preset machine learning model outputs a feature vector of other modal information based on an input feature vector of modal information.

The preset machine learning model may be a sequence to sequence (sequence to sequence, Seq2Seq) model or a multimodal cyclic translation network (multimodal cyclic translation network, MCTN).

Step 4: Prepare a multimodal test set, where the test set includes a plurality of modal information groups, each modal information group includes a plurality of pieces of modal information, and each piece of modal information is complete and has no missing part.

Step 5: Extract a feature vector of each piece of modal information in each modal information group in the multimodal test set. For an extraction manner of the feature vector of the modal information, refer to step 302. Details are not described herein.

Step 6: Test the trained machine learning model based on the feature vector of each piece of modal information in each modal information group in the multimodal test set.

A manner of testing the trained machine learning model is not limited in this embodiment of this application. For example, a feature vector of modal information A in a modal information group M in the test set may be input to the trained machine learning model, and a candidate feature vector of modal information B is output. A feature vector of the modal information B in the modal information group is compared with the candidate feature vector of the modal information B. If they are consistent or have a similarity greater than a specified value, it may be considered that the model training is successful; or otherwise, the model training fails, and steps 1 to 3 are performed again to continue to train the machine learning model. For another example, a feature vector of modal information A in a modal information group M in the test set may be input to the trained machine learning model, and a candidate feature vector of modal information B is output. The output candidate feature vector of the modal information B and a feature vector of remaining modal information in the modal information group M are input to the multimodal machine learning model for analysis. If an analysis result provided by the multimodal machine learning model on feature vectors of all modal information in the modal information group M is consistent with an analysis result provided by the multimodal machine learning model on the candidate feature vector of the modal information B and the feature vector of the remaining modal information, or if the analysis results have a similarity greater than a specified value, it may be considered that the training of the machine learning model is successful; or otherwise, the training of the machine learning model fails, and steps 1 to 3 are performed again to continue to train the model.

The successfully tested machine learning model may be configured in the completion module 230, to output a candidate feature vector of missing modal information based on an input feature vector of non-missing modal information.

Because there may be a plurality of pieces of non-missing modal information in the modal information group, when performing step 306, the completion module 230 may obtain a candidate feature vector of one piece of missing modal information based on a feature vector of one piece of non-missing modal information, or may obtain candidate feature vectors of a plurality of pieces of missing modal information based on feature vectors of a plurality of pieces of non-missing modal information, where a candidate feature vector of one piece of missing modal information may be obtained based on a feature vector of one piece of non-missing modal information.

Step 307: The completion module 230 may determine a target feature vector of the missing modal information by using the candidate feature vector of the missing modal information.

When the completion module 230 performs step 306, if one candidate feature vector of the missing modal information is generated, the completion module 230 may directly use the candidate feature vector of the missing modal information as the target feature vector of the missing modal information. In this case, the completion apparatus 230 may directly obtain the target feature vector of the missing modal information by performing step 306. The completion module 230 may alternatively adjust the candidate feature vector of the missing modal information, for example, enlarge or reduce the candidate feature vector of the missing modal information, and use an adjusted candidate feature vector of the first modal information as the target feature vector of the missing modal information. If a plurality of candidate feature vectors of the missing modal information are generated, the completion module 230 may determine the target feature vector of the missing modal information based on the plurality of candidate feature vectors of the missing modal information.

A manner in which the completion module 230 determines the target feature vector of the missing modal information based on the plurality of candidate feature vectors of the missing modal information is not limited in this embodiment of this application. For example, the completion module 230 may select one candidate feature vector of the missing modal information from the plurality of candidate feature vectors of the missing modal information as the target feature vector of the missing modal information, or may perform weighted summation on the plurality of candidate feature vectors of the missing modal information (that is, each candidate feature vector of the missing modal information corresponds to one weight), to obtain the target feature vector of the missing modal information. The weight of each candidate feature vector of the missing modal information may be an empirical value, or may be predetermined based on the multimodal machine learning model.

The following describes a manner in which the weight of each candidate feature vector of the missing modal information is predetermined based on the multimodal machine learning model.

A variable parameter is set for the weight of each candidate feature vector of the missing modal information, and the target feature vector of the missing modal information is determined by performing weighted summation on the plurality of candidate feature vectors of the missing modal information. The target feature vector includes the variable parameter. A specific value of the variable parameter is changed, and the target feature vector of the missing modal information and the feature vector of the non-missing modal information are input to the multimodal machine learning model each time the specific value of the variable parameter is changed, to determine an output value of the multimodal machine learning model. In this way, a plurality of output values of the multimodal machine learning model may be obtained. An output value that is closest to a real value and that is in the plurality of output values of the multimodal machine learning model is determined, and a specific value that is of the variable parameter in the target feature vector and that is corresponding to the output value is used as the weight of the candidate feature vector of the missing modal information.

An example in which the modal information group is a video, and the missing modal information is modal information of the text type is used. A weight of a candidate feature vector of the modal information of the text type is set to a parameter X, and the parameter X ranges from 0 to 1. A candidate feature vector of the modal information of the text type determined by using a feature vector of modal information of the speech type is fl, and a weight is X. A candidate feature vector of the modal information of the text type determined by using a feature vector of modal information of the image type is f2, and a weight is 1-X. A target feature vector of the modal information of the text type obtained in a weighted summation manner is X*f1 + (1-X)^{∗}f2. The parameter X is changed from 0 to 1 by 0.1 each time, and the target feature vector of the modal information of the text type, the feature vector of the modal information of the speech type, and the feature vector of the modal information of the image type are input to the multimodal machine learning model each time the parameter X is increased by 0.1, to obtain an output value of the multimodal machine learning model. In different application scenarios, the output value of the multimodal machine learning model indicates different information. An emotion recognition scenario is used as an example, and the output value of the multimodal machine learning model is used to indicate an emotion change of a character in the video. An output value that is closest to a real emotion change of the character in the video is determined from output values of the multimodal machine learning model, and a value that is of the parameter X in the target feature vector of the modal information of the text type and that is corresponding to the output value is a weight of a candidate feature vector of the modal information of the text type.

The completion module 230 may determine the target feature vector of the missing modal information by using the candidate feature vector of the missing modal information, so that the target feature vector of the missing modal information and the feature vector of the non-missing modal information may be obtained. The completion module 230 may send the target feature vector of the missing modal information and the feature vector of the non-missing modal information to the information processing device 300, and the information processing device 300 processes the target feature vector of the missing modal information and the feature vector of the non-missing modal information.

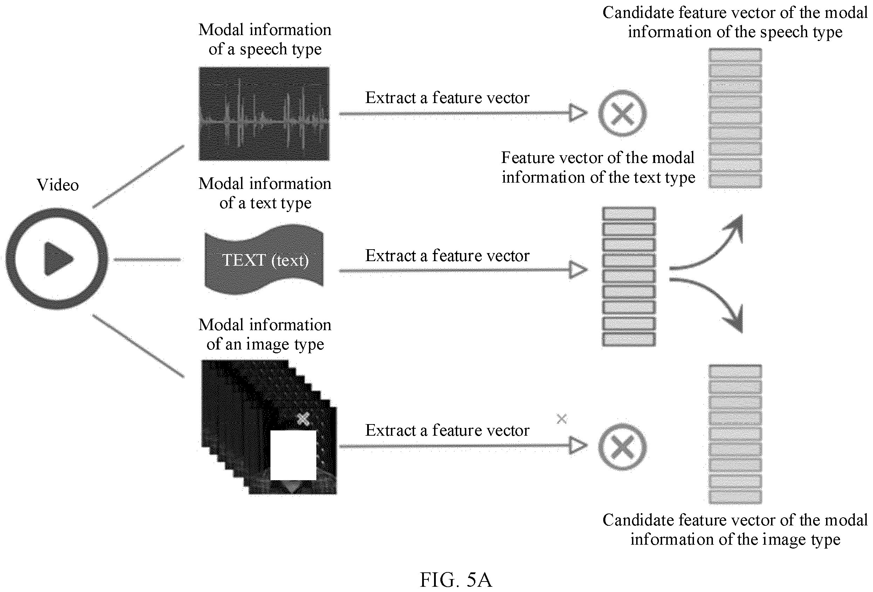

As shown in FIG. 5A, an example in which the modal information group is a video is used, and the video includes modal information of three types that are the speech type, the text type, and the image type. Modal information of the speech and image types is missing modal information, and feature vectors of the modal information of the speech and image types cannot be extracted. Modal information of the text type is non-missing modal information, and a feature vector of the modal information of the text type can be extracted. The completion module 230 may separately generate candidate feature vectors of the modal information of the speech and image types based on a preset feature vector mapping relationship and the feature vector of the modal information of the text type. The completion module 230 may use the candidate feature vectors of the modal information of the speech and image types as target feature vectors of the modal information of the speech and image types, and the completion module 230 may send the target feature vectors of the modal information of the speech and image types and the feature vector of the modal information of the text type to the information processing device 300 for subsequent processing.

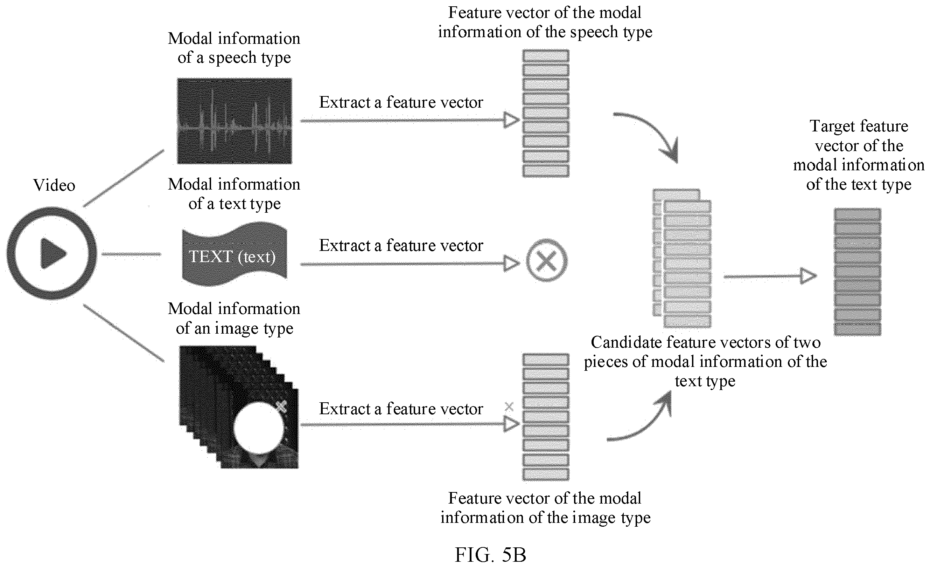

As shown in FIG. 5B, an example in which the modal information group is a video is used, and the video includes modal information of three types that are the speech type, the text type, and the image type. Modal information of the speech and image types is non-missing modal information, and feature vectors of the modal information of the speech and image types can be separately extracted. Modal information of the text type is missing modal information, and a feature vector of the modal information of the text type cannot be extracted. The completion module 230 may generate two feature vectors of the modal information of the text type based on a preset feature vector mapping relationship and the feature vectors of the modal information of the speech and image types. The completion module 230 may determine a target feature vector of the modal information of the text type based on the two candidate feature vectors of the modal information of the text type, and the completion module 230 may send the target feature vector of the modal information of the text type and the feature vectors of the modal information of the speech and image types to the information processing device 300 for subsequent processing.

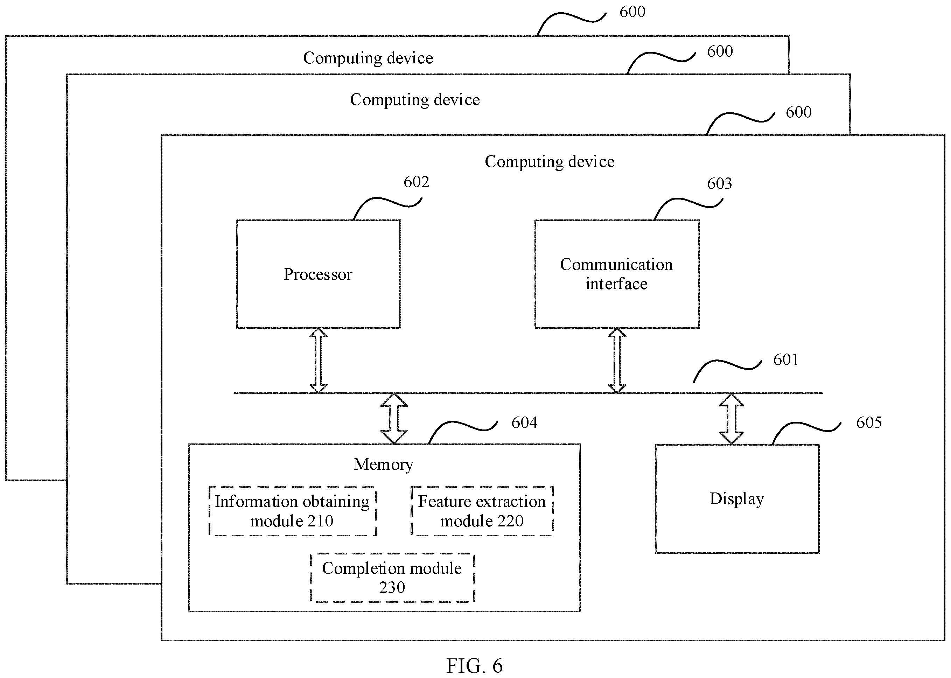

Based on a same inventive concept as the method embodiment, an embodiment of this application further provides a computer cluster, configured to perform the method shown in the foregoing method embodiment. For a related feature, refer to the foregoing method embodiment. Details are not described herein. As shown in FIG. 6, FIG. 6 is a computer cluster according to an embodiment of this application. The computer cluster includes at least one computing device 600, and a communication path is established between computing devices 600 by using a communication network.

Each computing device 600 includes a bus 601, a processor 602, a communication interface 603, and a memory 604. Optionally, the computing device 600 may further include a display 605. The processor 602, the memory 604, and the communication interface 603 communicate with each other by using the bus 601.

The processor 602 may include one or more general purpose processors, for example, a central processing unit (central processing unit, CPU), or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The memory 604 may include a volatile memory (volatile memory), for example, a random access memory (random access memory, RAM). The memory 604 may further include a non-volatile memory (non-volatile memory, NVM), for example, a read-only memory (read-only memory, ROM), a flash memory, a hard disk drive (hard disk drive, HDD), or a solid state drive (solid-state drive, SSD). The memory 604 may further include a combination of the foregoing types of memories.

The memory 604 stores executable code. The processor 602 may read the executable code in the memory 604 to implement a function, and may further communicate with another computing device by using the communication interface 603. In this embodiment of this application, the processor 602 may implement a function of one or more modules of the completion apparatus 200 (for example, one or more of the information obtaining module 210, the feature extraction module 220, and the completion module 230). In this case, the memory 604 stores one or more modules of the completion apparatus 200 (for example, one or more of the information obtaining module 210 and the feature extraction module 220).

In this embodiment of this application, the processors 602 in the plurality of computing devices 600 may work in coordination to perform the modal information completion method provided in the embodiments of this application.

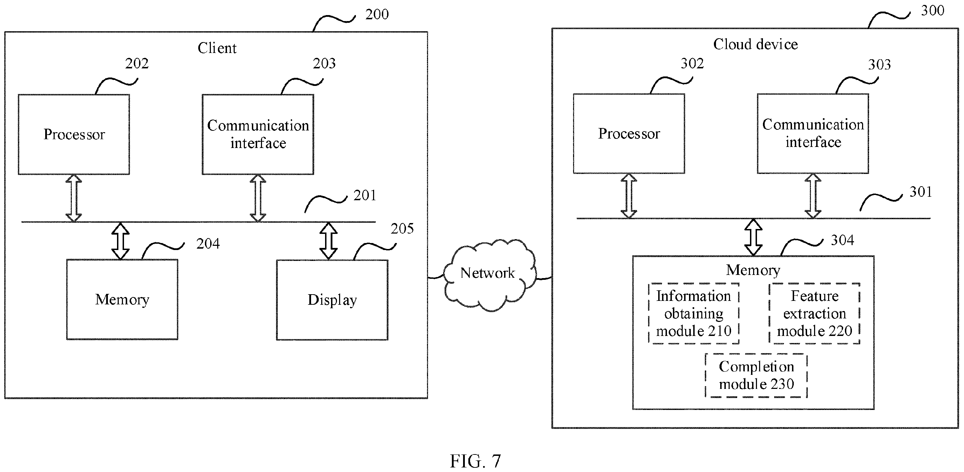

As shown in FIG. 7, FIG. 7 is a system architecture according to an embodiment of this application. The system architecture includes a client 200 and a cloud device 300 on which a change apparatus is deployed. The client 200 is connected to the cloud device 300 by using a network. The cloud device 300 is located in a cloud environment, and may be a server or a virtual machine deployed in a cloud data center. In FIG. 7, only an example in which the combination apparatus 100 is deployed on one cloud device 300 is used. In a possible implementation, the combination apparatus may be deployed on a plurality of cloud devices 300 in a distributed manner.

As shown in FIG. 7, the client 200 includes a bus 201, a processor 202, a communication interface 203, a memory 204, and a display 205. The processor 202, the memory 204, and the communication interface 203 communicate with each other by using the bus 201. For types of the processor 202 and the memory 204, refer to the related descriptions of the processor 602 and the memory 604. Details are not described herein. The memory 204 stores executable code. The processor 202 may read the executable code in the memory 204 to implement a function. The processor 202 may further communicate with the cloud device by using the communication interface 203. For example, the processor 202 may prompt, by using the display 205, a user to enter a modal information group, and feed back the modal information group to the cloud device 300 by using the communication interface 203.

As shown in FIG. 7, the cloud device 300 includes a bus 301, a processor 302, a communication interface 303, and a memory 304. The processor 302, the memory 304, and the communication interface 303 communicate with each other by using the bus 301. For types of the processor 302 and the memory 304, refer to the related descriptions of the processor 602 and the memory 604. Details are not described herein. The memory 304 stores executable code. The processor 302 may read the executable code in the memory 304 to implement a function, and may further communicate with the client 200 by using the communication interface 303. In this embodiment of this application, the processor 302 may implement a function of the completion apparatus 200. In this case, the memory 304 stores one or more of the information obtaining module 210, the feature extraction module 220, and the completion module 230 of the completion apparatus 200.

After receiving the modal information group from the client 200 by using the communication interface 303, the processor 302 may invoke the modules stored in the memory 304 to implement the modal information completion method provided in the embodiments of this application.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

The foregoing descriptions are merely specific implementations of the present invention. Any variation or replacement figured out by a person skilled in the art based on the specific implementations provided in the present invention shall fall within the protection scope of the present invention.

## Claims

1. A modal information completion method, wherein the method comprises:
obtaining a modal information group, wherein the modal information group comprises at least two pieces of modal information;
determining, based on an attribute of the modal information group, that a part or all of first modal information is missing from the modal information group, wherein the modal information group further comprises second modal information;
extracting a feature vector of the second modal information; and
determining a target feature vector of the first modal information based on a preset feature vector mapping relationship and the feature vector of the second modal information.

2. The method according to claim 1, wherein the determining a target feature vector of the first modal information based on a preset feature vector mapping relationship and the feature vector of the second modal information comprises:
determining a candidate feature vector of the first modal information based on the feature vector mapping relationship and the feature vector of the second modal information; and
determining the target feature vector of the first modal information based on the candidate feature vector of the first modal information.

3. The method according to claim 1 or 2, wherein the determining a target feature vector of the first modal information based on a preset feature vector mapping relationship and the feature vector of the second modal information comprises:
determining the target feature vector of the first modal information based on a preset machine learning model and the feature vector of the second modal information, wherein the machine learning model learns the feature vector mapping relationship and is used to output a feature vector of other modal information based on an input feature vector of modal information.

4. The method according to any one of claims 1 to 3, wherein the attribute of the modal information group comprises some or all of the following:
a quantity of pieces of modal information in the modal information group and a data volume of each piece of modal information in the modal information group.

5. The method according to any one of claims 1 to 4, wherein the method further comprises:
obtaining first auxiliary information, and determining the attribute of the modal information group based on the first auxiliary information, wherein the first auxiliary information is used to indicate some or all of the following: the quantity of pieces of modal information in the modal information group and the data volume of each piece of modal information in the modal information group;
determining the attribute of the modal information group based on preset second auxiliary information, wherein the second auxiliary information is used to indicate some or all of the following: a quantity of pieces of modal information in any obtained modal information group and a data volume of each piece of modal information in the any obtained modal information group; or
determining the attribute of the modal information group based on an attribute of another modal information group, wherein the another modal information group is a modal information group obtained before the modal information group is obtained.

6. The method according to any one of claims 1 to 5, wherein the modal information group further comprises third modal information; and
the method further comprises:
extracting a feature vector of the third modal information; and
determining the target feature vector of the first modal information based on the feature vector mapping relationship, the feature vector of the third modal information, and the feature vector of the second modal information.

7. The method according to claim 6, wherein the determining the target feature vector of the first modal information based on the preset feature vector mapping relationship, the feature vector of the third modal information, and the feature vector of the second modal information comprises:
determining another candidate feature vector of the first modal information based on the feature vector mapping relationship and the feature vector of the third modal information; and
determining the target feature vector of the first modal information based on the candidate feature vector of the first modal information and the another candidate feature vector of the first modal information.

8. The method according to any one of claims 1 to 7, wherein each piece of modal information comprised in the modal information group has a different type.

9. A completion apparatus, wherein the apparatus comprises:
an information obtaining module, configured to: obtain a modal information group, wherein the modal information group comprises at least two pieces of modal information; and determine, based on an attribute of the modal information group, that a part or all of first modal information is missing from the modal information group, wherein the modal information group further comprises second modal information;
a feature extraction module, configured to extract a feature vector of the second modal information; and
a completion module, configured to determine a target feature vector of the first modal information based on a preset feature vector mapping relationship and the feature vector of the second modal information.

10. The apparatus according to claim 9, wherein the completion module is specifically configured to:
determine a candidate feature vector of the first modal information based on the feature vector mapping relationship and the feature vector of the second modal information; and
determine the target feature vector of the first modal information based on the candidate feature vector of the first modal information.

11. The apparatus according to claim 9 or 10, wherein when determining the target feature vector of the first modal information based on the preset feature vector mapping relationship and the feature vector of the second modal information, the completion module is specifically configured to:
determine the target feature vector of the first modal information based on a preset machine learning model and the feature vector of the second modal information, wherein the machine learning model learns the feature vector mapping relationship and is used to output a feature vector of other modal information based on an input feature vector of modal information.

12. The apparatus according to any one of claims 9 to 11, wherein the attribute of the modal information group comprises some or all of the following:
a quantity of pieces of modal information in the modal information group and a data volume of each piece of modal information in the modal information group.

13. The apparatus according to any one of claims 9 to 12, wherein the information obtaining module is further configured to:
obtain first auxiliary information, and determine the attribute of the modal information group based on the first auxiliary information, wherein the first auxiliary information is used to indicate some or all of the following: the quantity of pieces of modal information in the modal information group and the data volume of each piece of modal information in the modal information group;
determine the attribute of the modal information group based on preset second auxiliary information, wherein the second auxiliary information is used to indicate some or all of the following: a quantity of pieces of modal information in any obtained modal information group and a data volume of each piece of modal information in the any obtained modal information group; or
determine the attribute of the modal information group based on an attribute of another modal information group, wherein the another modal information group is a modal information group obtained before the modal information group is obtained.

14. The apparatus according to any one of claims 9 to 13, wherein the modal information group further comprises third modal information;
the feature extraction module is further configured to:
extract a feature vector of the third modal information; and
the completion module is further configured to:
determine the target feature vector of the first modal information based on the feature vector mapping relationship, the feature vector of the third modal information, and the feature vector of the second modal information.

15. The apparatus according to claim 14, wherein when determining the target feature vector of the first modal information based on the preset feature vector mapping relationship, the feature vector of the third modal information, and the feature vector of the second modal information, the completion module is specifically configured to:
determine another candidate feature vector of the first modal information based on the feature vector mapping relationship and the feature vector of the third modal information; and
determine the target feature vector of the first modal information based on the candidate feature vector of the first modal information and the another candidate feature vector of the first modal information.

16. The apparatus according to any one of claims 9 to 15, wherein each piece of modal information in the modal information group has a different type.

17. A computing device, wherein the computing device comprises a processor and a memory, wherein
the memory is configured to store computer program instructions; and
the processor invokes the computer program instructions in the memory to perform the method according to any one of claims 1 to 8.

18. A computing device cluster, wherein the computing device cluster comprises a plurality of computing devices, each computing device comprises a processor and a memory, and a memory in at least one computing device is configured to store computer program instructions; and
a processor in the at least one computing device invokes the computer program instructions stored in the memory to perform the method according to any one of claims 1 to 8.
